# EUROPEAN PATENT SPECIFICATION

(11) **EP 1 464 161 B1**
(45) Date of publication and mention of the grant of the patent: **30.11.2005**
(21) Application number: 02703553.4
(22) Date of filing: 09.01.2002
(51) Int. Cl.: H04M 17/00, H04L 29/06, G06F 17/60

(54) **METHOD OF AND EQUIPMENT FOR CREDIT MANAGEMENT FOR ACCESS IN A TELECOMMUNICATIONS NETWORK**
VERFAHREN UND VORRICHTUNG ZUR VERWALTUNG VON GUTHABEN FÜR DEN ZUGANG ZU INFORMATION IN EINEM TELEKOMMUNIKATIONSNETZWERK
PROCEDE DE GESTION DE CREDIT ET EQUIPEMENT DE GESTION DE CREDIT POUR UN ACCES A UN RESEAU DE TELECOMMUNICATION

(43) Date of publication of application: 06.10.2004
(73) Proprietor: TELEFONAKTIEBOLAGET LM ERICSSON (publ), 164 83 Stockholm (SE)
(72) Inventor: LEWIS, Peter, Reginald, NL-5120 AA Rijen (NL)
(74) Representative: Valkonet, Rutger
(86) International application number: PCT/EP2002/000382
(87) International publication number: WO 2003/058943

(56) References cited:
- WO-A-98/56160
- US-A- 5 453 982
- US-A- 6 151 688

## Description

### Field of the Invention

The present invention relates to a method for managing unit reservation of an account by a credit management system in a multi service telecommunications system, wherein services are provided in exchange for units and wherein a predetermined amount of units is available for the account and which units are reserved before provisioning of a service.

### Background of the Invention

International Patent Application nr. WO 98/56160 describes a method wherein multiple parallel calls are provided in exchange for units, and wherein for each call an amount of units is reserved. At the end of each call, the remaining unused units are returned to the account.

International Patent Application nr. WO98/56160 discloses a prepaid method and system for handling parallel calls by reserving credits equivalent to a typical duration for each request, however, blocks requests, when insufficient amount of money is available.

The take up of prepaid subscriptions for mobile telephony has far exceeded anyone's expectations. Now in the light of 36 and true multi-service mobile networks it is likely that prepaid will take an ever greater stance. The introduction of prepaid into the fixed wireline networks is also likely.

Together with new technologies, the industry is experiencing consumer prices dropping to a level just above cost. The result of this is a significant increase in the level of service usage, e.g. the number of calls made.

The introduction of family prepaid accounts, where the one prepaid account has many users (mother, father, son, etc.), will complicate matters even more.

Moreover, the number of services offered is increasing rapidly, the number of users is still growing and the frequency and number of services accessed by each user is on the increase as well. Since most of these services are charged, the requirements placed on credit management systems (which responsibility is the financial management of user accounts) are becoming more and more demanding. Multiple services need to be charged to one account, which can be accessed by multiple users at the same time.

In order to reduce the load on the credit management system, each service capability server, e.g. a service control point (SCP) for telephony calls or a wireless application protocol (WAP) gateway is likely to make use of credit control protocols which effectively reserve chunks of credit -for the sole use of that service. For example, during a WAP session the WAP gateway may reserve 10 euros from the credit management system.

Credit reservation can also be a requirement for service deployment when the cost of the service cannot be determined based on a linear expression of time. For example, in charging for web access, where some web pages cost more than others, it is unknown how many pages will be accessed per minute and which pages will be accessed. Credit reservation ensures that services can be deployed with minimum delay.

Given the present situation, where multiple services can be accessed at the same time by one or more users, accordingly multiple credit reservations are placed against the same account at the same time.

It will be understood that a credit reservation differs from direct deduction of consumed credit from the account. Eventually, in the case of multiple credit reservations, a situation may occur where the credit management system shows a small amount of unreserved credits available and a service capability server requests to reserve or deduct a number of credits exceeding that left over. In this case the service is denied while the user is informed of the fact that there are insufficient credits available for that service. In fact, however, there are sufficient credits available, but these are all reserved for usage by other services.

Known solutions are either to have one server handling prepaid access for all services or alternatively not to allow credit to be reserved. However, the disadvantages of prior art is that neither option is suitable in a multi-service network.

The use of one service capability server handling all services is not feasible from an architectural point of view when discussing the large number of services available for mobile and fixed telephony and internet services.

The ability for service capability servers to reserve credit improves service delivery to the end-user and ensures availability of the credit management system to other users and servers. Removing the credit reservation facility will create serious architectural and performance issues.

### Summary of the Invention

It is an object of the present invention to provide a system for and a method of handling credit reservations that reduce the amount of erroneous denials of service by service provisioning means to the user, whilst maintaining the benefits of the existing architectural design, i.e. performance due to credit reservation and multiple service capability servers.

Another object the present invention, related to this, is improvement of quality of service, contributing to customer satisfaction.

These and other objects and advantages of the present invention are provided by a method for credit management of an account in a multi service telecommunications system, wherein services are provided in exchange for units, wherein a predetermined amount of units is available for the account and which units are reserved before provisioning of a service, characterized in that a forced booking of actually consumed units can be carried out.

By carrying out forced booking of consumed credits the credit management system can send a message to all service capability servers connected to an account, force them to book all the consumed credits and release the remaining credits. This ensures that the total balance in the account is up to date at the moment the forced booking has taken place. A forced booking could possibly take place as soon as the amount of credits in the account drops below a certain threshold.

If, following upon a forced booking, a forced credit accreditation request is being demanded by the credit management system, the service capability servers are informed of the availability of credits in the account and will place requests for credit at the credit management system. The credit management system will receive all outstanding requests and will start an accreditation procedure.

During the accreditation procedure the credit management system will be enabled to optimise distribution of available credits by using accreditation rules to evaluate the requests. For example, these accreditation rules can be based on history information like actual consumption of credits per unit of time, a classification of services (prioritization), the amount of credits requested, the life-span of the request (for how long is will the requested amount be reserved) or any other desired parameter for optimisation.

By analysing these and other factors an appropriate amount can be accredited to the service capability server, the main principle being that upon accreditation each server is provided less credits than previously held before the forced booking. It is thus less likely that service will inappropriately be refused due to lack of funds, in case a small amount of credits is remaining in the account. As the credit balance approaches zero, various services (using a service classification) can be refused credit if multiple services are active at the same time.

The advantages of using this method are numerous. The number of incorrect denials of service will be reduced substantially, improving the quality of service to the user. Of course this will result in improved customer satisfaction. Still, the performance benefits of credit reservation are maintained by allowing these reservations. In addition, the requirement of multiple service capability servers is met as well.

In an embodiment of the invention, a forced booking can be carried out by credit management, in order to force service provisioning means to book all consumed credits and release their reservations. This will enable credit management to update balance information of the account in order to rule out the possibility of providing incorrect information to the customer and thus avoid denial of service where inapplicable.

If this forced booking would be performed only in case the amount of credits drops below a predetermined threshold, the performance of a credit management means would not be disturbed too much.

In a further embodiment of the invention the forced booking could be made service dependent, for instance only the services with large outstanding credit reservations are forced to book their consumed credits. This approach could as well improve performance of the invention as it reduces the amount of bookings to be handled and does not require attention from all service provisioning means.

In yet another embodiment, the forced booking can be followed up by a request from the credit management means to the service provisioning means to place new accreditation requests for credit. This will avoid interference with the service provisioning processes as the service provisioning means will be able to build up a credit reserve again.

In addition, accreditation of these requests can be done according to accreditation rules that enable credit management to determine the most optimal distribution of credits amongst the service provisioning means.

These rules could be dependent on any parameter that requires optimisation, which of is an inexhaustible list dependent on the requirements of the telecommunications system as a whole. A number of possibilities is provided here as an example:
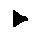 rate of credit consumption of a service,
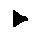 classification, for instance a prioritization, of services,
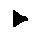 requested amount of credits,
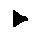 life span of the request (is the amount requested for 1 minute or 10 minutes).

It will be appreciated that, in an embodiment of the invention, said credits are monetary units, units of time, units of volume, for instance data volume of data transmitted through a network or maybe dependent on the amount of used bandwidth by the user of the account.

The account could in another embodiment of the invention be accessed by multiple users, if desired, at the same time.

The services could be related to a group which comprises voice, data and internet communications. Specific examples of said services are voice telephony, email, WAP, facsimile services, multimedia services, etc.

The invention could in an alternative embodiment be used in a telecommunications network which can be accessed by users via both fixed and wireless connections.

Said telecommunication system, in an embodiment of the invention, could comprise a plurality of service provisioning systems, in communicative connection to said credit management.

Specifically, the invention could be part of a multi service telecommunications system, wherein services are provided in exchange for units, wherein a predetermined amount of units is available for the account and which units are reserved before provisioning of a service, wherein the credit of available units for the account is being registered or managed by at least one credit management system.

Credit management of the invention could be a system or even a part of a system that is part of the telecommunications system as a whole. Of course alternatively, credit management can be performed at the user's premises, in the equipment used to access the network, or any other device in communicative connection with said telecommunications system.

### Brief Description of the Drawings

FIGURE 1 shows a multi service telecommunications network including credit management according to the invention
FIGURE 2 shows a process flow diagram of the forced booking method according to the invention.

### Detailed Description of the Embodiments

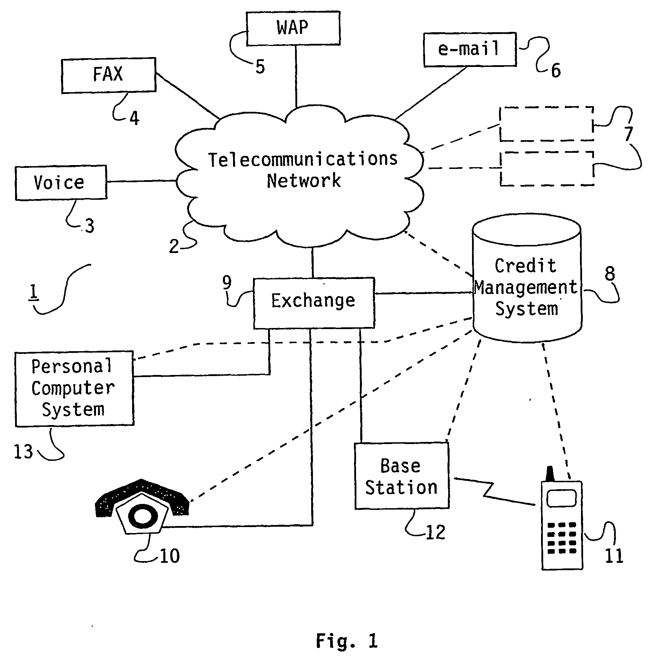

Figure 1 shows a multi service telecommunications network 1, which comprises a network 2 (comprising a set of exchanges, routers and other equipment physically connected with each other) a plurality of service provisioning gateways 3-7, providing services such as voice services 3, fax services 4, WAP services 5, e-mail services 6, and others 7 generally indicated by broken lines in fig. 1. It further comprises a credit management system 8, an exchange enabling access to the network, a base station 12 required to establish a wireless connection between mobile communications means 11 and exchange 9, fixed communications means 10 and a personal computer system 13. The credit management system 8, here connected to exchange 9, could be connected directly to or be part of the communications means 10-11 and 13, base station 12, any of the service gateways 3-7 or any other device in the network. In this figure the alternative connections for 8 are shown as dotted lines.

Suppose a single account can be accessed by any of the means 10, 11 and 13 at any time and any of these means 10, 11 and 13 can make use of any of the services 3-7 at the same time. When mobile communications means 11 accesses the network through base station 12 and requests any of the services 3-7, for instance WAP 5, the service gateway 5 submits a credit reservation request at the credit management system 8 which determines whether the amount of credits is sufficient to accept the reservation. If, for instance, the reservation is accepted, the credit management system 8 notifies the WAP gateway 5 of the acceptance and the gateway provides service to the user at mobile communications means 11.

If, following upon WAP service provisioning to mobile communications means 11, personal computer system 13 requests e-mail services 6 while mobile user 11 is still using WAP (and maybe more services are requested by any of the users at 10, 11 and 13 at the same time), the credit management system 8 might discover there are insufficient credits still available for reservation. Credit management system 8 will force booking of all consumed credits and at the same time release all outstanding reservations, upon which the credit management system 13 updates the account balance information. The credit management system 8 will then request each of service gateways 3-7 to submit new credit accreditation requests (reservations) after which, upon receiving of the requests, the credit management system will evaluate all the requests using a set of accreditation rules.

The set of rules used to evaluate all requests and to accredit amounts of credit to service gateways 3-7, can be based on a inexhaustible number of desirable parameters to optimise. For example, the rules can be based on history information like credit consumption rate, a classification of services like a prioritization of services (voice could be more important to a user than WAP), the amount of credits requested, the life-span of the request (for how long is will the requested amount be reserved) or any other parameter.

With these rules, the credit management system 8 can decide upon the most optimal distribution of credits amongst the service gateways 3-7. The service gateways will then provide service to the user (or deny service in case the account is empty). The user will not experience denial of service unless his/her balance really is insufficient.

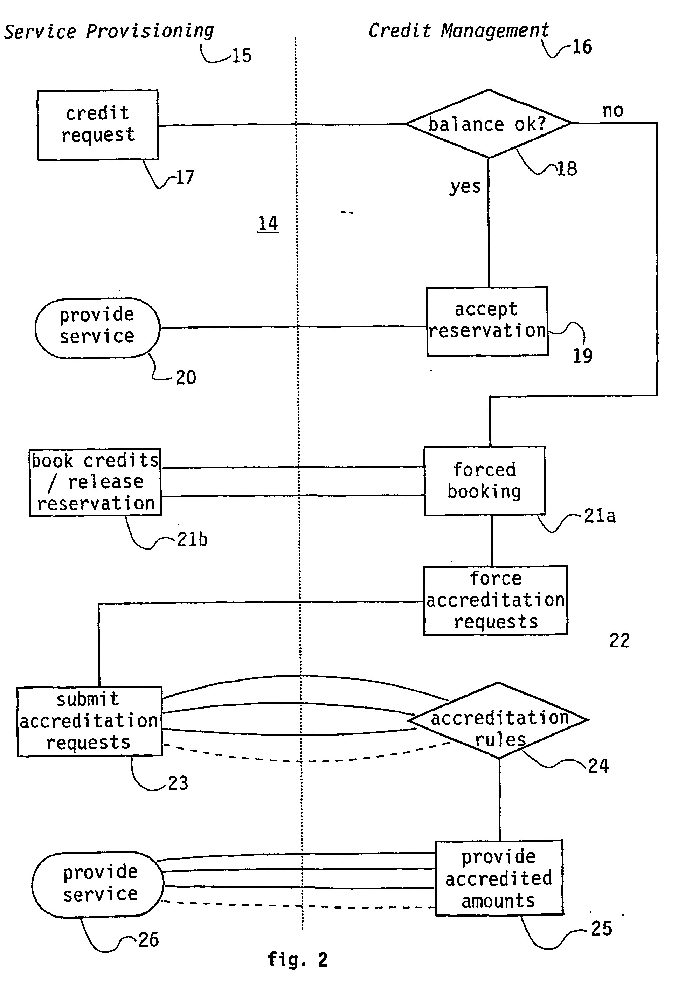

Figure 2 shows a typical process flow chart of the method according to the invention. As it is a communications protocol between service provisioning means 15 and credit management means 16, the flowchart shows where the events are happening on either sides of the dotted line.

The process starts with any service provisioning means 15 placing a credit request (reservation) 17 at credit management system 16. The credit management system 16, upon receiving the request, checks the balance of the account in step 18 and in case the balance check is positive the reservation is accepted 19 and service is provided 20. In case the balance check 18 shows a negative result, the credit management system carries out a forced booking 21a of all consumed credits, the service provisioning means 16 will book all consumed credits and release outstanding reservations in step 21b. The credit management system 16 then forces all service provisioning means 16 to submit their new credit accreditation requests in step 22, which requests are placed in step 23. After receiving these requests, the credit management system 16 will in step 24 evaluate all requests making use of a set of accreditation rules. These rules are dependent on and determined by the parameters that are desired to optimise distribution of credits 25 for. When all credit amounts are determined the credit management system 16 will distribute 25 the amounts amongst service provisioning means 15 which will on their turn provide service to the user in terminal step 26.

It will be appreciated that numerous modifications and variations of the present invention are possible in the light of the above teachings. It is therefore understood that within the scope of the appended claims, the invention may be practised otherwise than as specifically described herein.

## Claims

1. A method for managing unit reservation of an account by a credit management system (8, 16) in a multi service telecommunications system (1), wherein services (3, 4, 5, 6, 7) are provided in exchange for units, wherein a predetermined amount of units is available for the account and which units are reserved before provisioning of a service (3, 4, 5, 6, 7), **characterized by** comprising a step of forced booking (21a) during service provisioning by said credit management system (8, 16) of actually consumed units for at least one service (3, 4, 5, 6, 7).

2. A method according to claim 1, wherein said forced booking (21a) is carried out if said amount of units drops below a predetermined threshold.

3. A method according to any of the previous claims, wherein said forced booking (21a) is service dependent.

4. A method according to any of the previous claims, wherein in connection with said forced booking (21a) a request for accreditation (23) of units can be carried out for said services (3, 4, 5, 6, 7).

5. A method according to any of the previous claims, wherein accreditation of said units is subject to a plurality of accreditation rules (24).

6. A method according to claim 5, in which at least one of said accreditation rules (24) is dependent on the actual use of said units per unit of time per service (3, 4, 5, 6, 7).

7. A method according to claim 5, in which at least one of said accreditation rules (24) is dependent on a classification of said services (3, 4, 5, 6, 7).

8. A method according to claim 7, wherein said classification is a prioritization.

9. A method according to claim 5, in which at least one of said accreditation rules (24) is dependent on the amount of units requested.

10. A method according to claim 5, in which at least one of said accreditation rules (24) is dependent on the life-span of requested units.

11. A method according to any of the previous claims, wherein said units are monetary units. ,

12. A method according to any of the claims 1-10, wherein said units are units of time.

13. A method according to any of the claims 1-10, wherein said units are units of volume.

14. A method according to claim 13, wherein said volume is a data volume.

15. A method according to any of the claims 1-10, wherein said units relate to the amount of used bandwidth.

16. A method according to any of the previous claims, wherein said account can be accessed by at least one user (10, 11, 12, 13).

17. A method according to any of the previous claims, which is used in a telecommunications environment, wherein at least one of the services (3, 4, 5, 6, 7) provided relates to a group comprising voice, data and internet communications.

18. A method as described in any of the preceding claims, wherein said telecommunications environment is accessible via a group comprising wireless and fixed connections to a telecommunications network.

19. A method according to any of the previous claims, wherein management or provisioning of said services (3, 4, 5, 6, 7) is carried out by a plurality of service provisioning systems (15) which are in communicative connection with said credit management (8, 16).

20. A multi service telecommunications system (1), comprising at least one credit management system (8, 16) adapted for registering or managing reservation of available units in an account comprising a predetermined amount of units, further comprising means adapted for providing services (3, 4, 5, 6, 7) in exchange for units, said means being further arranged for reserving units before provisioning of a service (3, 4, 5, 6, 7), **characterized in that** said credit management system (8, 16) is arranged for carrying out a forced booking (21a) of actually consumed units during service provisioning for at least one service (3, 4, 5, 6, 7).

21. A multi service telecommunications system (1) according to claim 20, wherein said credit management system (8, 16) forms at least a part of a device comprised in said telecommunication system.

22. A multi service telecommunications system (1) according to claim 20, wherein said credit management system (8, 16) forms at least a part of a user device (10, 11, 12, 13) comprised in an arrangement for connecting to said telecommunications system.

## Patentansprüche

1. Verfahren zum Managen von Einheitenreservierung eines Kontos durch ein Kreditmanagementsystem (8, 16) in einem Mehrfachdienst-Telekommunikationssystem (1), wobei Dienste (3, 4, 5, 6, 7) im Austausch für Einheiten vorgesehen werden, wobei eine vorbestimmte Menge von Einheiten für das Konto verfügbar ist und die Einheiten vor Bereitstellung eines Dienstes (3, 4, 5, 6, 7) reserviert werden, **gekennzeichnet durch** Umfassen eines Schritts zum Zwangsbuchen (21a) während Dienstbereitstellung **durch** das Kreditmanagementsystem (8, 16) von tatsächlich verbrauchten Einheiten für mindestens einen Dienst (3, 4, 5, 6, 7).

2. Verfahren nach Anspruch 1, wobei das Zwangsbuchen (21a) ausgeführt wird, falls die Menge von Einheiten unter eine vorbestimmte Schwelle fällt.

3. Verfahren nach beliebigen der vorherigen Ansprüche, wobei das Zwangsbuchen (21a) dienstabhängig ist.

4. Verfahren nach beliebigen der vorherigen Ansprüche, wobei in Verbindung mit dem Zwangsbuchen (21a) eine Anforderung für Akkreditierung (23) von Einheiten für die Dienste (3, 4, 5, 6, 7) ausgeführt werden kann.

5. Verfahren nach beliebigen der vorherigen Ansprüche, wobei Akkreditierung der Einheiten Gegenstand für eine Vielzahl von Akkreditierungsregeln (24) ist.

6. Verfahren nach Anspruch 5, wobei mindestens eine der Akkreditierungsregeln (24) von der tatsächlichen Verwendung der Einheiten pro Zeiteinheit pro Dienst (3, 4, 5, 6, 7) abhängig ist.

7. Verfahren nach Anspruch 5, wobei mindestens eine der Akkreditierungsregeln (24) von einer Klassifizierung der Dienste (3, 4, 5, 6, 7) abhängig ist.

8. Verfahren nach Anspruch 7, wobei die Klassifizierung eine Priorisierung ist.

9. Verfahren nach Anspruch 5, wobei mindestens eine der Akkreditierungsregeln (24) von der Menge von angeforderten Einheiten abhängig ist.

10. Verfahren nach Anspruch 5, wobei mindestens eine der Akkreditierungsregeln (24) von der Laufzeit von angeforderten Einheiten abhängig ist.

11. Verfahren nach beliebigen der vorherigen Ansprüche, wobei die Einheiten Geldeinheiten sind.

12. Verfahren nach beliebigen der Ansprüche 1-10, wobei die Einheiten Zeiteinheiten sind.

13. Verfahren nach beliebigen der Ansprüche 1-10, wobei die Einheiten Volumeneinheiten sind.

14. Verfahren nach Anspruch 13, wobei das Volumen ein Datenvolumen ist.

15. Verfahren nach beliebigen der Ansprüche 1-10, wobei sich die Einheiten auf die Menge verwendeter Bandbreite beziehen.

16. Verfahren nach beliebigen der vorherigen Ansprüche, wobei auf das Konto durch mindestens einen Benutzer (10, 11, 12, 13) zugegriffen werden kann.

17. Verfahren nach beliebigen der vorherigen Ansprüche, welches in einer Telekommunikationsumgebung verwendet wird, wobei sich mindestens einer der bereitgestellten Dienste (3, 4, 5, 6, 7) auf eine Gruppe bezieht, umfassend Sprache, Daten und Internetkommunikationen.

18. Verfahren, wie in beliebigen der vorangehenden Ansprüche beschrieben, wobei die Telekommunikationsumgebung über eine Gruppe zugreifbar ist, umfassend drahtlose und feste Verbindungen zu einem Telekommunikationsnetz.

19. Verfahren nach beliebigen der vorherigen Ansprüche, wobei Management oder Bereitstellung der Dienste (3, 4, 5, 6, 7) durch eine Vielzahl von Dienstbereitstellungssystemen (15) ausgeführt wird, die in kommunikativer Verbindung mit dem Kreditmanagement (8, 16) sind.

20. Mehrfachdienst-Telekommunikationssystem (1), umfassend mindestens ein Kreditmanagementsystem (8, 16), angepasst zum Registrieren oder Managen von Reservierung von verfügbaren Einheiten in einem Konto, umfassend eine vorbestimmte Menge von Einheiten, ferner umfassend Mittel, angepasst zum Bereitstellen von Diensten (3, 4, 5, 6, 7) im Austausch für Einheiten, wobei das Mittel ferner angeordnet ist zum Reservieren von Einheiten vor Bereitstellung eines Dienstes (3, 4, 5, 6, 7), **gekennzeichnet dadurch, dass** das Kreditmanagementsystem (8, 16) angeordnet ist zum Ausführen eines Zwangsbuchens (21a) von tatsächlich verbrauchten Einheiten während Dienstbereitstellung für mindestens einen Dienst (3, 4, 5, 6, 7).

21. Mehrfachdienst-Telekommunikationssystem (1) nach Anspruch 20, wobei das Kreditmanagementsystem (8, 16) mindestens einen Teil einer Einrichtung bildet, die in dem Telekommunikationssystem enthalten ist.

22. Mehrfachdienst-Telekommunikationssystem (1) nach Anspruch 20, wobei das Kreditmanagementsystem (8, 16) mindestens einen Teil einer Benutzereinrichtung (10, 11, 12, 13) bildet, die in einer Anordnung zum Verbinden mit dem Telekommunikationssystem enthalten ist.

## Revendications

1. Procédé pour gérer la réservation d'unités d'un compte par un système de gestion de crédit (8, 16) dans un système de télécommunication multiservice (1), dans lequel des services (3, 4, 5, 6, 7) sont fournis en échange d'unités, dans lequel une quantité prédéterminée d'unités est disponible pour le compte et ces unités sont réservées avant le déploiement d'un service (3, 4, 5, 6, 7), **caractérisé en ce qu'**il comprend une étape d'enregistrement forcé (21a), pendant le déploiement de service, par le système de gestion de crédit (8, 16), d'unités réellement consommées pour au moins un service (3, 4, 5, 6, 7).

2. Procédé selon la revendication 1, dans lequel l'enregistrement forcé (21a) est effectué si ladite quantité d'unités tombe au-dessous d'un seuil prédéterminé.

3. Procédé selon l'une quelconque des revendications précédentes, dans lequel l'enregistrement forcé (21a) dépend du service.

4. Procédé selon l'une quelconque des revendications précédentes, dans lequel, en liaison avec l'enregistrement forcé (21a), une demande d'accréditation (23) d'unités peut être effectuée pour les services (3, 4, 5, 6, 7).

5. Procédé selon l'une quelconque des revendications précédentes, dans lequel l'accréditation des unités est sujette à une multiplicité de règles d'accréditation (24).

6. Procédé selon la revendication 5, dans lequel au moins une des règles d'accréditation (24) dépend de l'utilisation réelle des unités par unité de temps et par service (3, 4, 5, 6, 7).

7. Procédé selon le revendication 5, dans lequel au moins une des règles d'accréditation (24) dépend d'une classification des services (3, 4, 5, 6, 7).

8. Procédé selon la revendication 7, dans lequel la classification est une définition d'ordre de priorité.

9. Procédé selon la revendication 5, dans lequel au moins une des règles d'accréditation (24) dépend de la quantité d'unités demandées.

10. Procédé selon la revendication 5, dans lequel au moins une des règles d'accréditation (24) dépend de la durée de vie d'unités demandées.

11. Procédé selon l'une quelconque des revendications précédentes, dans lequel les unités sont des unités monétaires.

12. Procédé selon l'une quelconque des revendications 1-10, dans lequel les unités sont des unités de temps.

13. Procédé selon l'une quelconque des revendications 1-10, dans lequel les unités sont des unités de volume.

14. Procédé selon la revendication 13, dans lequel le volume est un volume de données.

15. Procédé selon l'une quelconque des revendications 1-10, dans lequel les unités concernent la quantité de largeur de bande utilisée.

16. Procédé selon l'une quelconque des revendications précédentes, dans lequel au moins un utilisateur (10, 11, 12, 13) peut accéder audit compte.

17. Procédé selon l'une quelconque des revendications précédentes, qui est utilisé dans un environnement de télécommunication, dans lequel au moins un des services (3, 4, 5, 6, 7) fournis concerne un groupe comprenant des communications vocales, de données et Internet.

18. Procédé selon l'une quelconque des revendications précédentes, dans lequel l'environnement de télécommunication est accessible par l'intermédiaire d'un groupe comprenant des connexions sans fil et fixes à un réseau de télécommunication.

19. Procédé selon l'une quelconque des revendications précédentes, dans lequel la gestion ou le déploiement des services (3, 4, 5, 6, 7) est accompli par une multiplicité de systèmes de déploiement de services (15) qui sont en connexion de communication avec la gestion de crédit (8, 16).

20. Système de télécommunication multiservice (1), comprenant au moins un système de gestion de crédit (8, 16) adapté pour enregistrer ou gérer la réservation d'unités disponibles dans un compte comprenant une quantité d'unités prédéterminée, comprenant en outre un moyen adapté pour fournir des services (3, 4, 5, 6, 7) en échange d'unités, ce moyen étant en outre agencé pour réserver des unités avant le déploiement d'un service (3, 4, 5, 6, 7), **caractérisé en ce que** le système de gestion de crédit (8, 16) est agencé pour accomplir un enregistrement forcé (21a) d'unités réellement consommées pendant le déploiement de service pour au moins un service (3, 4, 5, 6, 7).

21. Système de télécommunication multiservice (1) selon la revendication 20, dans lequel le système de gestion de crédit (8, 16) constitue au moins une partie d'un dispositif incorporé dans le système de télécommunication.

22. Système de télécommunication multiservice (1) selon la revendication 20, dans lequel le système de gestion de crédit (8, 16) constitue au moins une partie d'un dispositif d'utilisateur (10, 11, 12, 13) incorporé dans un agencement pour la connexion au système de télécommunication.
